Europäisches Patentamt

European Patent Office

Office européen des brevets

(11) Veröffentlichungsnummer : **0 034 756**
**B1**

(12) **EUROPÄISCHE PATENTSCHRIFT**

(45) Veröffentlichungstag der Patentschrift :
23.05.84

(51) Int. Cl.³ : **G 11 B 23/02**

(21) Anmeldenummer : **81100953.9**

(22) Anmeldetag : **11.02.81**

(54) Gehäuse für als Bandspule oder in Bandkassetten aufbewahrtes bandförmiges Material.

(30) Priorität : **23.02.80 DE 3006864**

(43) Veröffentlichungstag der Anmeldung :
**02.09.81 Patentblatt 81/35**

(45) Bekanntmachung des Hinweises auf die Patenterteilung : **23.05.84 Patentblatt 84/21**

(84) Benannte Vertragsstaaten :
**AT BE CH DE FR GB IT LI LU NL SE**

(56) Entgegenhaltungen :
**EP-A- 0 017 134**
**DE-A- 2 145 718**
**DE-A- 2 817 920**
**FR-A- 2 311 379**
**FR-A- 2 420 818**
**GB-A- 1 224 737**
**US-A- 3 051 537**
**US-A- 3 532 211**
**US-A- 3 627 398**
**US-A- 3 904 150**

(73) Patentinhaber : **BASF Aktiengesellschaft**
**Carl-Bosch-Strasse 38**
**D-6700 Ludwigshafen (DE)**

(72) Erfinder : **Glinlorz, Lothar**
**Carl-Bosch-Ring 24**
**D-6710 Frankenthal (DE)**
Erfinder : **Dobler, Peter**
**Don Carlos-Strasse 17**
**D-6700 Ludwigshafen (DE)**
Erfinder : **Schoettle, Klaus**
**Ladenburger Strasse 70**
**D-6900 Heidelberg (DE)**
Erfinder : **Flohr, Joachim**
**Jaegerstrasse 1**
**D-6806 Viernheim (DE)**
Erfinder : **Maerthesheimner, Rolf**
**Alzeyer Strasse 74**
**D-6520 Worms (DE)**

## Beschreibung

Die Erfindung bezieht sich auf ein Gehäuse für als Bandspule oder in Bandkassetten aufbewahrtes bandförmiges Material, insbesondere Magnetband, bestehend aus Boden- und Deckelteilen, die zusammen mindestens eine Front- und Rückwand und zwei Seitenwände besitzen und die mittels seitlich angeordneter Verbindungseinrichtungen für eine Bewegung zwischen einer Offen- und Schließstellung beweglich miteinander verbunden sind, wobei im Bodenteil Aufnahmeeinrichtungen für die Bandspule oder Bandkassette vorhanden sind.

In der DE-A-25 21 371 ist ein Behälter zur Aufnahme einer Magnetbandkassette beschrieben, bei dem Boden- und Deckelteil ineinander verschiebbar sind. Der Platzbedarf eines solchen Gehäuses ist im geöffneten Zustand fast doppelt so groß wie in der Schließstellung der Gehäuseteile, so daß es für klein und kompakt zu konzipierende Geräte wenig geeignet ist.

In der als DE-A-29 12 423 veröffentlichten deutschen Patentanmeldung wird ferner eine Magnetbandkassette vorgeschlagen, bei der Boden- und Deckelteil durch Gelenke miteinander verbunden sind. Zur Verminderung des Platzbedarfs der Kassette im geöffneten Zustand sind weitere gelenkige Unterteilungen vorgesehen, damit das Deckelteil um das Bodenteil geschlagen und mittels Haft- oder Klemmverbindungen an diesem befestigt werden kann. In der derartig bewerkstelligten Offenstellung der Kassette ist die Bandspule für den Betrieb in einem Bandlaufwerk zugänglich.

Die gelenkigen Verbindungen sowie die Haft- und Klemmverbindungen zwischen den Kassettenteilen sind herstellungstechnisch kompliziert, ebenso die Handhabung der Kassette.

Mit der US-A-39 04 150 ist eine Magnetbandkassette bekannt, bei der ein Deckel über Verbindungseinrichtungen mit dem Kassettengehäuse verbunden ist, die aus seitlich am Kassettengehäuse angeordneten Nuten und passenden Drehzapfen am Deckel bestehen, so daß der Deckel um den Umriß des Kassettengehäuses in dessen Ebene verschiebbar ist. Die Verschiebebewegung erfordert viel zusätzlichen Raum.

Vorliegender Erfindung liegt die Aufgabe zugrunde, ein Gehäuse für als Bandspule oder in Bandkassetten aufbewahrtes bandförmiges Material, insbesondere Magnetband, zu entwickeln, das sowohl herstellungstechnisch und für die Handhabung einfach als auch für einen minimalen Raumbedarf verkleinert ist.

Die erfindungsgemäße Lösung besteht nun darin, daß bei einem Gehäuse der eingangs beschriebenen Art in Offenstellung das Deckelteil unter dem Bodenteil zu liegen kommt, daß die Verbindungseinrichtungen, aus Führung -Zapfen-Verbindungen bestehen, wobei an einander zugewandten Seiten bzw. seitenwänden der Boden- und Deckelteile insgesamt zwei zueinander parallele Führungen und zwei diesen Führungen zugeordnete Zapfen vorgesehen sind, die entlang der zwei Führungen verschiebbar sind für eine Schiebebewegung des Deckelteils von der Offenstellung in eine Stellung, in der die Schiebebewegung in eine Schwenkbewegung übergeht, und daß für die Schwenkbewegung des Deckelteils in die Schließstellung eine Vorrichtung vorgesehen ist, die den vom Drehpunkt entfernter liegenden Zapfen außer Eingriff mit der ihm zugeordneten Führung bringt.

Durch die Verwendung von zwei Führungen und Zapfen wird eine Erhöhung der Führungsstabilität beim Ineinanderschieben der beiden Gehäuseteile erreicht.

Das erfindungsgemäße Gehäuse ist sowohl herstellungstechnisch einfach als auch handlich und unkompliziert in seinem Gebrauch. Daneben zeichnet es sich durch seinen geringen Raumbedarf aus.

In praktischer Ausführung sind die zwei Führungen an der Seitenwand eines der Boden- oder Deckelteile und die zwei Zapfen seitlich am anderen der Teile angeordnet, bzw. es sind an jedem der Boden- und Deckelteile seitlich jeweils eine Führung und ein Zapfen vorgesehen, wobei jeweils der Zapfen des einen Teils mit der Führung des anderen Teils in Eingriff steht.

Zweckmäßig sind die beiden Zapfen dabei im Abstand zur äußeren Rückwandfläche angeordnet, um eine ungehinderte Schwenkbewegung des Deckels zu ermöglichen. In weiterer vorteilhafter Ausbildung des Gehäuses entspricht der Radius der Kreisbogenführung dem Abstand zwischen den beiden Zapfen.

Weitere Einzelheiten und Vorteile der Erfindung sind nachfolgend anhand eines in der Zeichnung dargestellten Ausführungsbeispiels beschrieben.

Es zeigen

Figur 1 das Gehäuse in seinen Einzelheiten in perspektivischer Darstellung,

Figur 2 Bodenteil und Deckelteil des Gehäuses in der Schwenkstellung,

Figur 3 Bodenteil und Deckelteil in der Schiebestellung.

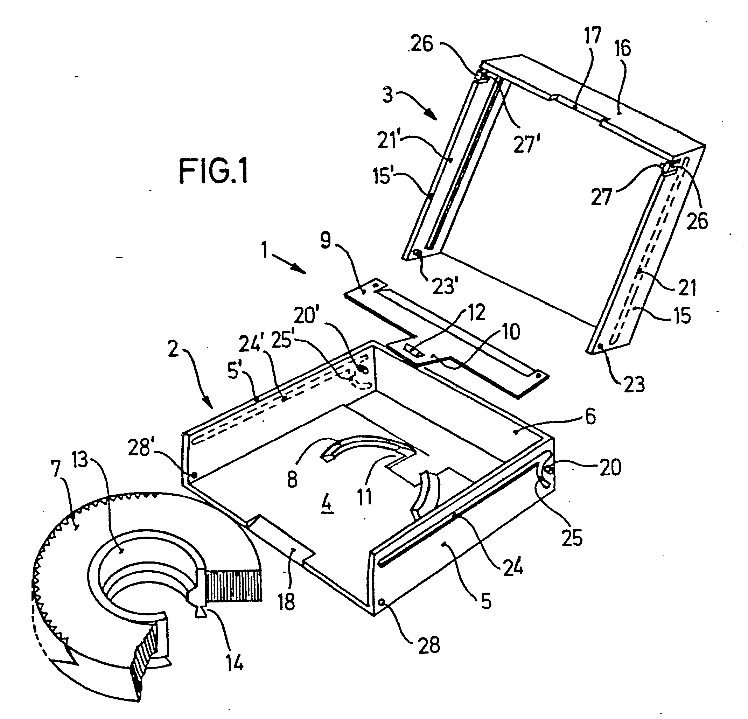

Das Gehäuse 1 besteht aus einem Bodenteil 2 und einem Deckelteil 3 (Fig. 1). Am Boden 4 des Teils 2 sind zwei Seitenwände 5, 5' und eine Rückwand 6 angeformt bzw. befestigt. Der Boden 4 weist ferner Einrichtungen zur Aufnahme einer aus bandförmigen Material, z. B. Magnetband, gewickelten Spule 7 auf. Im vorliegenden Ausführungsbeispiel bestehen diese Einrichtungen aus einem zur offenen Seite des Bodenteils hin offenen Halbkreissteg 8, der in geringem Abstand über dem Boden schwalbenschwanzförmig hinterschnitten ist, und aus einer am Boden zwischen Rückwand und Steg befestigten Blattfeder 9. Sie tritt mit einer Lasche 10 durch eine Aussparung 11 im Steg vor das Stegprofil, wobei die Lasche geringfügig eingeschnitten und der dadurch gebildete kleine Ausschnitt 12 zur Rückwand 6 zeigend aufgebogen ist. Der Halbkreissteg 8 kann angeformt oder aus dem Boden 4 herausgearbeitet sein. Selbstverständlich ist es auch möglich, den Steg separat herzustellen und am Boden anzukleben bzw. anzuschweißen.

In die hinterschnittene Profilierung des Halbkreisstegs ist der Kern 13 der Spule 7 mittels seiner Ringnut 14, die der Hinterschneidung angepaßt ist, zur Halterung im Bodenteil 2 einschiebbar und dabei mittels des hinter der Ringnut federnd einrastenden Ausschnitts 12 der Blattfeder 9 feststellbar.

Es versteht sich, daß das Gehäuse nicht auf bestimmte Aufnahmeeinrichtungen für die Spule beschränkt ist. So kann beispielsweise auch eine Drehlagerung für den Spulenkern vorgesehen werden. Ebenso ist es bei entsprechender Bemessung des Gehäuses möglich, zwei im Boden drehbar gelagerte Spulen, zwischen denen das Band umzuspulen ist, vorzusehen, beispielsweise für eine der bekannten Kompakt-Kassette ähnliche Magnetbandkassette.

Das Deckelteil 3 besitzt im vorliegenden Ausführungsbeispiel des Gehäuses 1 ebenfalls zwei Seitenwände 15, 15' sowie eine Frontwand 16. Die Anordnung dieser Wände ist so bemessen, daß im geschlossenen Zustand des Gehäuses das Bodenteil 2 vom Deckelteil 3 übergriffen wird, so daß ein allseitig geschlossener Behälter entsteht. Für eine leichtere Handhabung beim Öffnen des Gehäuses sind an der Frontwand eine kleine Einbuchtung 17 und am Boden 4 in Höhe dieser Einbuchtung eine Griffmulde 18 vorgesehen.

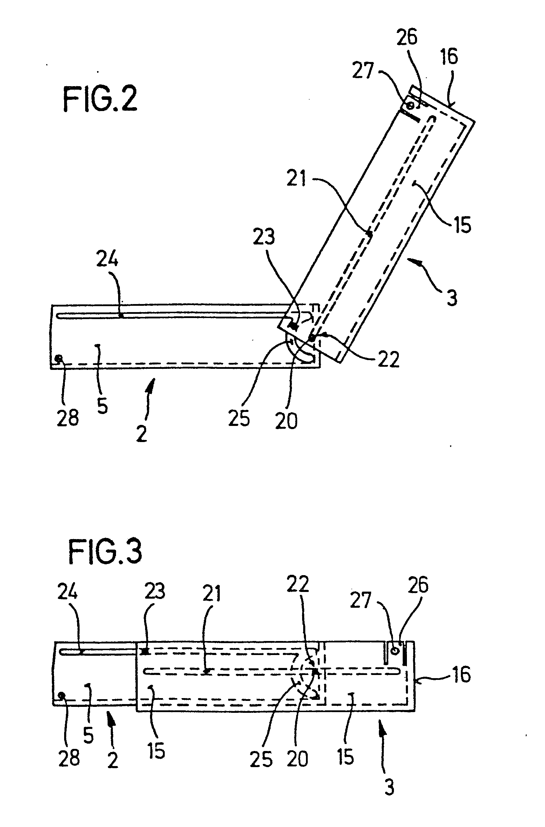

Wie die Figuren 2 und 3 zeigen, sind Bodenteil 2 und Deckelteil 3 über Drehzapfen 20, 20' am einen Teil und Führungen am anderen Teil sowohl drehbar als auch ineinander verschiebbar verbunden.

Die Drehzapfen 20, 20' befinden sich an den beiden Seitenwänden nahe dem rückwärtigen Ende beispielsweise des Gehäuseteils 2, während die Führungen in Form jeweils einer parallel zum Boden 4 und etwa auf halber Höhe in jeder Seitenwand 15, 15' des anderen Gehäuseteils verlaufenden Nut 21, 21' gebildet sind. Die Drehzapfen sind in den beiden Nuten sowohl drehbar als auch verschiebbar. Für eine bessere Führung der beiden Gehäuseteile 2 und 3 zueinander ist es zweckmäßig, die beiden Nuten in einer Höhe über der Innenfläche des Gehäuseteils 3 anzuordnen, die dem Abstand des Drehzapfens von der Außenfläche des Gehäuseteils 2 entspricht.

Durch Abstand der beiden Drehzapfen 20, 20' von der rückwärtigen Kante der Seitenwände 5, 5' erhalten Bodenteil 2 und Deckelteil 3 während des Ineinanderschiebens bzw. in der eingeschobenen Stellung der Teile eine stabile Lage zueinander.

Erfindungsgemäß sind zweite Führungen am einen Gehäuseteil und Führungsstifte 23, 23' dafür am anderen Teil vorgesehen. Dabei muß dafür gesorgt werden, daß diese Führungen um die Drehpunkte 22 der Drehzapfen 20, 20' durch einen freien Auslauf für die Führungsstifte bezüglich der Schwenkbewegung der beiden Gehäuseteile 2 und 3 aufgehoben sind.

Im vorliegenden Ausführungsbeispiel sind die zweiten Führungen ebenfalls durch jeweils eine Nut 24, 24' in den Seitenwänden 5, 5' des Bodenteils 2 gebildet. Sie verlaufen parallel und im Abstand zu den ersteren Nuten 21, 21'. Die beiden Führungsstifte 23, 23' sind an der Innenseite der Seitenwände 15, 15' des Deckelteils 3 in zu den Nuten 24, 24' passender Höhe angebracht, die in im Kreisbogen um die Drehpunkte 22 verlaufende Nuten 25, 25' münden. Der Radius des Kreisbogens entspricht dem Abstand der Führungsstifte vom Drehpunkt 22 der Drehzapfen 20, 20'.

Eine Vereinfachung des Gehäuses kann sich dadurch ergeben, daß sowohl die Nuten 21, 21' für die Drehzapfen 20, 20' als auch die Nuten 24, 24' für die Führungsstifte 23, 23' in ein und demselben Seitenwandpaar eines Gehäuseteils vorgesehen werden, so daß das Seitenwandpaar des anderen Gehäuseteils entfallen kann. Für die Drehzapfen und Führungsstifte sind dann an letzterem Teil entsprechende Stützelemente vorzusehen.

Zum Feststellen von Bodenteil 2 und Gehäuseteil 3 gegeneinander sowohl in deren Schließstellung als auch in deren eingeschobener Stellung dient ein lösbarer Einrastmechanismus. Er besteht aus Laschen 26, 26', die durch Einschnitte in den beiden Seitenwänden 15, 15' des Deckelteils 3 am frontseitigen Ende gebildet sind und an deren Innenseite kuppenartige Erhöhungen 27, 27' angeformt sind. Bestandteil des Mechanismus sind ferner Vertiefungen bzw. Bohrungen 28, 28', die seitlich und außen am Bodenteil 2 nahe dem front- und rückseitigen Ende unmittelbar über der äußeren Bodenkante eingebracht sind. In diese können die Kuppen der beiden Laschen in den genannten Endstellungen der Gehäuseteile einrasten. Anstelle der rückseitigen Vertiefungen bzw. Bohrungen können auch die kreisbogenförmigen Nuten 25, 25' verwendet werden.

Zur Verwendung als Behälter für eine Bandkassette braucht das vorstehend beschriebene Gehäuse lediglich in seinen Abmessungen der darin aufzubewahrenden Bandkassette angepaßt werden. Es versteht sich, daß dann die Einrichtungen 8, 11 zur Aufnahme einer Bandspule entfallen. An ihre Stelle können z. B. Dorne am Gehäuseboden treten, die in die zentrale Wickelkernöffnungen der in der Kassette befindlichen Bandspulen eingreifen.

## Ansprüche

1. Gehäuse für als Bandspule oder in Bandkassetten aufbewahrtes bandförmiges Material, insbesondere Magnetband, bestehend aus Boden und Deckelteilen (2, 3), die zusammen mindestens eine Front- und Rückwand (16, 6) und zwei Seitenwände (5, 5' bzw. 15, 15') besitzen und die mittels seitlich angeordneter Verbindungseinrichtungen für eine Bewegung zwischen einer Offen- und Schließstellung miteinander verbunden sind, wobei im Bodenteil (2) Aufnahmeeinrichtungen für die Bandspule (7) oder Bandkassette vorhanden sind, dadurch gekennzeichnet, daß in Offenstellung das Deckelteil (3) unter dem Bodenteil (2) zu liegen kommt, daß die Verbindungseinrichtungen, aus Führung- und Zapfen-Verbindungen bestehen, wobei an einander zugewandten Seiten bzw. Seitenwänden der Boden- und Deckelteile (2, 3) insgesamt zwei zueinander parallele Führungen (21 und 24) und zwei diesen zugeordnete Zapfen (20 und 23) vorgesehen sind, die entlang der zwei Führungen (21 und 24) verschiebbar sind für eine Schiebebewegung des Deckelteils (3) von der Offenstellung in eine Stellung, in der die Schiebebewegung in eine Schwenkbewegung übergeht, und daß für die Schwenkbewegung des Deckelteils (2) in die Schließstellung eine Vorrichtung (25) vorgesehen ist, die den vom Drehpunkt (22) entfernter liegenden Zapfen (23) außer Eingriff mit der ihm zugeordneten Führung (24) bringt.

2. Gehäuse nach Anspruch 1, dadurch gekennzeichnet, daß die Vorrichtung zum Außer-Eingriffbringen des vom Drehpunkt (22) entfernter liegenden Zapfens (23) aus seiner Führung (24) aus einer Kreisbogenführung (25) besteht, die in der Nähe des Drehpunktes (22) der Schwenkbewegung an die dem genannten Zapfen (23) zugeordnete Führung (24) anschließt.

3. Gehäuse nach Anspruch 1 oder 2, dadurch gekennzeichnet, daß die zwei Führungen (21 und 24) an der Seitenwand eines der Boden- oder Deckelteile (2 oder 3) und die zwei Zapfen (20 und 23) seitlich am anderen der Teile angeordnet sind.

4. Gehäuse nach einem der Ansprüche 1 oder 2, dadurch gekennzeichnet, daß an jedem der Boden- und Deckelteile (2 und 3) seitlich jeweils eine Führung (21 bzw. 24) und ein Zapfen (20 bzw. 23) vorgesehen sind, wobei jeweils der Zapfen (20 oder 23) des einen Teils (2, 3) mit der Führung (21 bzw. 24) des anderen Teils (3 bzw. 2) in Eingriff steht.

5. Gehäuse nach einem der Anspruch 1 bis 4, dadurch gekennzeichnet, daß die beiden Zapfen (20, 23) im Abstand zur äußeren Rückwandfläche (6) angeordnet sind.

6. Gehäuse nach Anspruch 2, dadurch gekennzeichnet, daß der Radius der Kreisbogenführung (25) dem Abstand zwischen den beiden Zapfen (20 und 23) entspricht.

## Claims

1. A container for tape-like material, especially magnetic tape, wound into a roll or stored in a cartridge, which container consists of a bottom part (2) and a top part (3) which together have at least a front and a rear wall (16 and 6 respectively) and two side walls (5, 5' ; 15, 15'), and which are connected together by laterally arranged connecting means permitting them to move between an open and a closed position, the bottom part (2) being provided with means for accommodating the tape roll (7) or cartridge, wherein, in the open position, the top part (3) comes to lie beneath the bottom part (2) ; the connecting means consist of guides and studs, the side walls of the bottom and top parts (2 and 3 respectively) which are associated with one another being provided with a total of two parallel guides (21 and 24) and two studs (20 and 23) that cooperate therewith and can slide in the two guides (21 and 24) to enable the top part (3) to slide from the open position to a position in which the sliding movement turns into a pivoting movement ; and, to enable the top part (3) to pivot into the closed position, a means (25) is provided which causes the stud (23) that is more remote from the pivot point (22) to disengage from the guide (24) with which it cooperates.

2. A container as claimed in claim 1, wherein the means for disengaging the stud (23), which is more remote from the pivot point (22), from its guide (24) consists of an arcuate guide (25) which merges into the guide (24), cooperating with the said stud (23), in the vicinity of the pivot point (22).

3. A container as claimed in claim 1 or 2, wherein the two guides (21 and 24) are arranged on the side wall of one of the container parts (bottom part 2 or top part 3), and the two studs (20 and 23) are arranged laterally on the other container part..

4. A container as claimed in claim 1 or 2, wherein a guide (21) and a stud (23) are arranged laterally on the top part (3), and a guide (24) and a stud (20) are arranged laterally on the bottom part (2), stud (20) on part (2) being in engagement with guide (21) on part (3), and stud (23) on part (3) being in engagement with guide (24) on part (2).

5. A container as claimed in any of claims 1 to 4, wherein the two studs (20 and 23) are arranged in spatial relationship to the rear wall (6).

6. A container as claimed in claim 2, wherein the radius of the arcuate guide (25) corresponds to the distance between the two studs (20 and 23).

## Revendications

1. Boîtier pour matériau en bande, conservé sous forme de bobine de bande ou en cassettes de bande, en particulier bande magnétique, constitué de parties fond et couvercle (2, 3), qui possèdent ensemble au moins une paroi avant et une paroi arrière (16, 6) et deux parois latérales (5, 5', ou 15, 15') et qui sont reliées, entre elles, grâce à des moyens de liaison disposés latéralement, pour un déplacement entre une position d'ouverture et une position de fermeture, des moyens d'enregistrement pour la bobine de bande (7) ou la cassette de bande étant prévus dans la partie fond (2), caractérisé par le fait que, dans la position d'ouverture, la partie couvercle (3) vient se placer sous la partie fond (2), que les moyens de liaison sont constitués de systèmes à téton et rainure de guidage, deux rainures de guidage (21 et 24) parallèles l'une à l'autre et deux tétons (20 et 23) associées à celles-ci, étant prévues, au total, sur les faces ou parois latérales tournées l'une vers l'autre des parties fond et couvercle (2, 3), tétons qui peuvent être déplacés par coulissement le long des deux rainures de guidage (21 et 24) pour déplacer en translation la partie couvercle (2), de la position d'ouverture à une position dans laquelle le mouvement de translation se transforme en mouvement de pivotement et, pour l'amenée par pivotement de la partie couvercle (2) dans la position de fermeture, il est prévu un moyen (25) qui amène le tenon (23), situé le plus loin du point de rotation (22), hors de prise avec la rainure de guidage (24) qui lui est associée.

2. Boîtier selon la revendication 1, caractérisé par le fait que le moyen de mise hors de prise de sa rainure de guidage (24) du téton (23) le plus éloigné du point de rotation (22) est constitué par une rainure en arc de cercle (25) qui, au voisinage du point de rotation (22) du mouvement de pivotement, se raccorde à la rainure de guidage (24) associée audit téton (23).

3. Boîtier selon la revendication 1 ou 2, caractérisé par le fait que les deux rainures de guidage (21 et 24) sont ménagées sur la paroi latérale d'une des parties, fond ou couvercle (2 ou 3), et les deux tétons (20 et 23) sont ménagés sur l'autre de ces parties.

4. Boîtier selon l'une des revendications 1 ou 2, caractérisé par le fait que, sur chacune des parties fond et couvercle (2 et 3), sont prévues respectivement une rainure de guidage (21 ou 24) et un téton (20 ou 23), le téton (20 ou 23) de l'une des parties (2, 3) étant en prise avec la rainure de guidage (21 ou 24) de l'autre partie (3 ou 2).

5. Boîtier selon l'une des revendications 1 à 4, caractérisé par le fait que les deux tétons (20, 23) sont situés à distance des surfaces de paroi arrière (6).

6. Boîtier selon la revendication 2, caractérisé par le fait que le rayon de la rainure de guidage en arc de cercle (25) correspond à l'écartement entre les deux tétons (20 et 23).

FIG.1

FIG.2

FIG.3